# EUROPEAN PATENT SPECIFICATION

(11) **EP 2 169 191 B1**
(45) Date of publication and mention of the grant of the patent: **07.11.2012**
(21) Application number: 09012411.6
(22) Date of filing: 30.09.2009
(51) Int. Cl.: B01D 46/50, F01N 3/022, B01D 46/00, B01D 46/24, F01N 3/023, F01N 3/027

(54) **Method and apparatus for regenerating a filter**
Verfahren und Vorrichtung zur Regenerierung eines Filters
Méthode et dispositif de régénération d'un filtre.

(30) Priority: 30.09.2008 WO PCT/EP2008/008298
(43) Date of publication of application: 31.03.2010
(73) Proprietor: Perkins Engines Company Limited, Peterborough, PE1 5NA (GB)
(72) Inventor: Ladha, Karim, Coalville, Leicester LE67 4RF (GB); Williams, Andrew Morgan, Glen Parva Leicester LE2 9TS (GB); Harry, John Ernest, Braunston, Oakham Rutland LE15 8QX (GB); Garner, Colin Peter, Leicestershire LE11 3JR (GB); Hoare, David William, Loughborough LE11 4SL (GB); Heaton, David M., Yarwell nr. Peterbrough PE8 6PR (GB); Binner, Jonathan Graham Peel, Nottingham NG10 3QF (GB)
(74) Representative: Kramer - Barske - Schmidtchen

(56) References cited:
- US-A1- 2004 079 631
- US-A1- 2006 065 121
- US-A1- 2008 127 637

## Description

### Technical Field

The present disclosure refers to a method for regenerating or cleaning any kind of a particulate collecting surface or preferably a filter, e.g. a diesel particulate filter, adapted to remove particulate material from a gas. Furthermore, the present disclosure refers to a filter regenerating arrangement, e.g., a diesel filter regenerating arrangement, and to a diesel particulate filter (DPF) as such.

### Background

Internal combustion engines and the like, as well as, e.g., stationary hydrocarbon burning equipment, tend to emit, via their exhaust systems, carbonaceous particles commonly referred to as particulates or particulate material as, e.g. soot and/or ash. Whilst efforts are being expanded towards reducing particulate emissions at the source, particulate filters in the exhaust systems of such equipment are useful in helping to meet increasingly strict environmental legislation and public expectations.

Particulate filters which may be regenerated are generally known. Basically, the known regeneration techniques may be classified into three groups of regeneration techniques. In the first group, the regeneration is effected by oxidation of the accumulated particulates, like soot, using excess oxygen in the exhaust, or using trace quantities of NO₂ from NOₓ emissions of the engine, i.e. a thermal process is carried out. However, the starting temperature of the corresponding oxidation reaction is relatively high, e.g. higher than 600 °C. A second group of regeneration techniques uses a non-thermal plasma for producing highly excited electrons that interact with gas molecules, thus creating radicals. These radicals assist in further enhancing carbon oxidation. A third group may comprise regeneration techniques where filters are regenerated by means of mechanical action, flow and/or pressure waves.

WO 01/04467 discloses an apparatus and a method for removing particulates from a gas stream. A ceramic monolith filter having a depth less than 100 mm uses a first electrode to produce an atmospheric local discharge near a first end of the filter. Although the combination of the reduced-depth ceramic filter and atmospheric load discharge allegedly provided far more efficient particulate removal and filter regeneration performance than all known arrangements, it has been established that the performance may be improved still further.

WO 2007/023267 A1 discloses an apparatus and method for removing particulates from a gas stream, which also uses an atmospheric load discharge. Both above-identified documents use an atmospheric load discharge in a gap between an electrode and the filter body. Due to this produced atmospheric load discharge, the particulate material trapped in the filter acts as grounding sites for the atmospheric load discharge, and the discharge oxidizes the particulate material. Due to the use of the atmospheric load discharge, regenerating the filter requires the filter material be designed to resist high temperatures, e.g. more than 600°C or even more than 1000°C. In addition, the power consumption may be relatively high for regenerating a particulate filter like a diesel particulate filter. A very similar method and filter arrangement is also disclosed in EP 1 192 335 B1.

A method and device of removing electrically-conducting particles from a stream of gas is disclosed in WO 94/07008. A particle-contaminated filter is regenerated in situ by subjecting the trapped particles to a spark discharge and/or a short duration electric arc discharge for a length of time such that the particles ignite and are thus converted by combustion into gaseous compounds.

US 2001/0042372 A1 discloses an exhaust gas filtration system using a non-thermal plasma generator that periodically, or continuously, oxidizes carbon deposited or trapped within a filter disposed downstream of a non-thermal plasma generator. EP 1 219 340 A1 also refers to a non-thermal plasma reactor capable of lower power consumption to be used in a method for treating a combustion exhaust stream. Another non-thermal plasma reactor having a lower power consumption is known from US 2002/0076368 A1.

US 2006/0065121 A1 discloses a particulate filter assembly which comprises an electrode assembly, a particulate filter positioned in an electrode gap defined between two electrodes of the electrode assembly, a power supply electrically coupled to the electrode assembly, and a controller for controlling operation of the power supply to apply a regenerate-filter signal to the electrode assembly to oxidize particulates collected by the particulate filter. Consequently, carbon in the particulates reacts with ozone created and thereby particulates are oxidized. Accordingly, this known particulate filter assembly may pose the same problems as the above-identified filter assemblies.

Another oxidizing method for cleaning particulate filters is known from US 2004/0079631 A1. Again, the filter is regenerated by non-thermal electric surface creeping discharge on filter surfaces covered with particles. In addition, nitrogen oxides may be reduced by selective catalytic reduction.

Another system for regenerating a diesel particulate filter is disclosed in US 2007/0130924 A1. Again, this diesel particulate filter uses oxidation for removing particulates.

Mechanical means for cleaning the dust collecting surfaces of electric gas purifying chambers are known from GB 257,283. According to this disclosed arrangement, dust collecting surfaces are arranged and constructed so that they will bend when fluctuations occur in the pressure of gas flowing through purification chambers. Owing to the bending or yielding movements of the dust collecting surfaces, dust adhering to them is caused to fall off. The fluctuations in pressure may occur automatically or may be produced artificially in order to ensure a uniform shaking of the dust collecting surfaces. Here, the fin walls of the filter means will bend in accordance with the changes in the gas or air pressure being applied to their exterior.

Another diesel particulate filter is disclosed in US 2008/0092525 A1. In this particulate filter, ash particles are removed by generating a pressure wave and transmitting the pressure wave into a housing containing the diesel particulate filter. The pressure wave dislodges ash particulates from the filter, which can then be removed from the filter using an ash collecting apparatus, such as a vacuum. The pressure waves are generated by pulses of compressed gas.

US 2008/0127637 A1 discloses a filter element to remove at least a portion of the particulate from an exhaust flow. The cleaning of the filter element includes detonating a fuel-oxidizer combination in a conduit and impacting the filter element with a wave from the detonation. Consequently, the same problems as already mentioned above may arise.

Another system for removing particulates from a filtering device of machine is shown in US 2007/0137150 A1. Here, the system may include a flow assembly configured to direct a flow of gas through the filtering device, with one ore more elements of the flow assembly being removably attached to a first opening of the filtering device. The system may also include a sound generation assembly configured to direct sound waves toward the filtering device to remove particulates from the filtering device. For removing matter from the filtering device, a heater or some other heat source may be used to increase the temperature of the filtering device. The heater may also increase the temperature of trapped particulate matter above its combustion temperature, thereby burning away the collected particulate matter and regenerating the filtering device while leaving behind ash.

US 5,900,043 discloses an electrostatic filter with process for fast cleaning without breaking confinement using an acoustic wave generator.

WO 2008/054262 A1 discloses a device for cleaning a diesel particulate filter. A vacuum source is positioned to draw a cleaning fluid and waste material through the filter. A collector is positioned to receive the waste material released from the filter during a filter cleaning event.

In US 2005/0106985 A1 a reactor comprises a reactor body having a generally elongated form made from a dielectric material and crossed by separate parallel channels extending longitudinally within the body. Electrodes are provided for generation of discharge coronas in the body for initiating the treatment of a gas flow.

A regenerative soot filter device and methods for regenerating a soot filter using a microwave generator are disclosed in EP 1 304 456 A1. In DE 103 45 925 A1 a particulate filter uses a device adapted to generate an alternating electrical field for heating up and burning the particulate matter.

All prior filter regenerating systems may require large and complex systems. The present disclosure is directed, at least in part, to improving or overcoming one or more aspects of prior filter regenerating systems.

### Summary of the Disclosure

According to a first aspect of the present disclosure a method for regenerating a filter adapted to remove particulate material from a gas comprises producing at least one series of electric arc discharge pulses, wherein the at least one series of electric arc discharge pulses is adapted to generate at least one series of electric arc discharges and thereby at least one series of pressure waves for dislodging the particulate material including soot, and other particulate materials trapped by the filter including ash.

According to a second aspect of the present disclosure a filter regenerating arrangement may comprise a pulse generating device. The pulse generating device is adapted to generate at least one series of electric arc discharge pulses, wherein the at least one series of electric arc discharge pulses is adapted to generate at least one series of electric arc discharges and thereby at least one series of pressure waves that cause particulates trapped in the filter to be dislodged from the filter but not be burned. The arrangement optionally further comprises a particulate removing device adapted to remove the already dislodged particulate material from the filter.

Another aspect of the present disclosure refers to a diesel particulate filter which consists of a filter material adapted to trap particulate material, the filter material having a maximum temperature resistance of about 600 °C, preferably of about 500 °C to 550 °C, or more preferably of about 400 °C to 450 °C. The diesel particulate filter further comprises at least two electrodes adapted to generate electric arc discharges in the filter caused by at least one series of electric arc discharge pulses that causes the particulate material trapped in the filter to be dislodged from the filter by at least one series of pressure waves. The generated electric arc discharges do not burn the particulate material trapped in the filter.

It is to be understood that both the foregoing general description and the following detailed description are exemplary and explanatory only and are not restrictive of the disclosure.

Other features and aspects of this disclosure will be apparent to the skilled person based upon the following description, the accompanying drawings and the attached claims.

### Brief Description of the Drawings

Fig. 1 shows a schematic block diagram of an exemplary embodiment of a filter regenerating arrangement according to a first exemplary embodiment of the present disclosure,

Fig. 2 is a schematic perspective view of an exemplary embodiment of a filter to be used, e.g., in the filter regenerating arrangement shown in Fig. 1,

Fig. 3 is a diagram sectional view of a filter shown, e.g., in Fig. 2, including electrodes according to an exemplary arrangement pattern,

Fig. 4 is a diagram longitudinal view of the filter shown in Figs. 2 and 3.

Fig. 5 is a schematic perspective view of another exemplary embodiment of a filter to be used, e.g., in the filter regenerating arrangement shown in Fig. 1,

Fig. 6 is a block diagram of an exemplary embodiment of a pulse generating device to be used in a filter regenerating arrangement, e.g., as shown in Fig. 1,

Fig. 7 is an example of a schematic circuit diagram used to produce electric arc discharge pulses,

Fig. 8 is a graph illustrating an exemplary embodiment of a series of electric arc discharge pulses generated e.g. by means of a circuit as shown in Fig. 6 or 7,

Fig. 9 shows various exemplary embodiments of one electric arc discharge pulse produced e.g. by means of the circuits as shown in Fig. 6 and 7, wherein the pulses have different powers or shapes or amplitudes.

Fig. 10 is a schematic block diagram of a laboratory test arrangement representing an exemplary filter regenerating arrangement according to the present disclosure,

Fig. 11 shows a pre regeneration curve and opposed "three-minute" post regeneration curve resulting from tests using the test arrangement shown in Fig. 10,

Fig. 12 shows the test results obtained by using the laboratory test arrangement shown in Figs. 10,

Fig. 13 shows a longitudinal section of a filter having inlet channels and outlet channels partially treated according to the present disclosure,

Fig. 14 shows a schematic arrangement for generating an electrically variable spark gap,

Fig. 15 shows another schematic arrangement for generating an electrically variable spark gap including a plurality of nodes of a controlled spark gap distributor,

Fig. 16 shows an experimental electrode an power supply arrangement according to the present disclosure,

Fig. 17 shows test results of an electrically variable breakdown voltage for the spark gap arrangement shown in Fig. 13, and

Fig. 18 shows sketches of waveforms seen during testing.

### Detailed Description

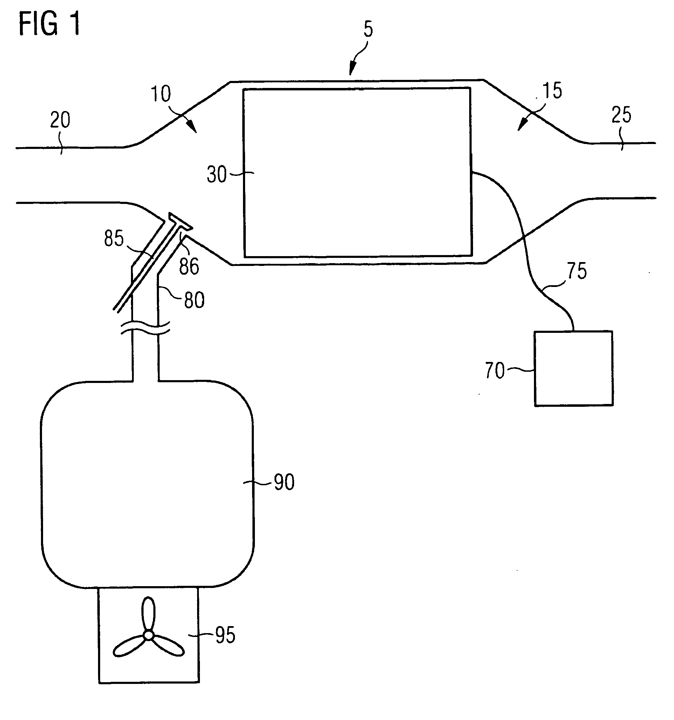

Referring to the drawings, Fig. 1-4 and 6-9 illustrate an exemplary embodiment of a non-thermal regenerating filter arrangement 5 according to the present disclosure.

Fig. 1 a shows a schematic block diagram of the non-thermal filter regenerating arrangement 5 adapted to remove particulate material 120 from a gas 40, e.g., exhaust gas from an internal combustion engine. The exhaust gas 40 may have a relatively high temperature when it leaves the internal combustion engine (not shown) which can be, for example, a diesel engine. The filter arrangement 5 shown in Fig. 1 may comprise a housing 6 in which a filter device 30 is accommodated. A filter inlet 10 connects to the housing 6. An exhaust conduit 20 is connected to the filter inlet 10. A filter outlet 15 may be connected to the housing 6 on another side of the filter device 30. The filter outlet 15 may end in an exhaust conduit 25 for filtered gas 50.

In the present exemplary embodiment shown in Fig. 1, a branch line 80 is in fluid communication with the filter inlet 10. A storage container 90 which may be equipped with an extractor fan 95 is connected to the branch line 80. A movable valve 85 may be arranged at the port 86 so that the port 86 can be opened and closed by means of the valve 85. Of course, other controllable means may be provided or adapted to close and open the connection between the filter inlet 10 and the storage container 90.

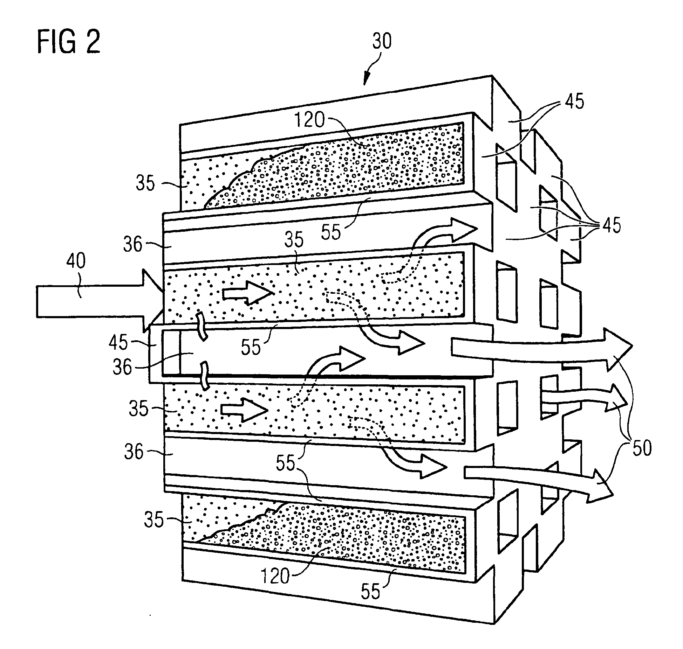

As schematically shown, a pulse generating device 70 is connected to electrodes 100, 110 (see, e.g., Figs. 2-4, 6, and 7) via an electrical wiring 75. The electrodes are arranged within the filter device 30 as shown, e.g., in Figs. 2-4.

Exhaust gas 40 entering the filter arrangement 5 via the exhaust conduit 20 and the following filter inlet 10 is required to pass into the filter device 30. The cleaned exhaust gas 50 may exit the filter 30 via the filter outlet 15 and the attached exhaust conduit 25. Detailed explanations with regard to the construction and design of the filter device 30 and the path the exhaust gases take within the filter device 30 will follow below with reference to Figs. 2-5.

During the normal operation of the filtering device 30, i.e. when cleaning the exhaust gas 40 entering into the filter inlet 10, the valve 85 closes the port 86 of the branch line 80.

If particulate material 120 has been dislodged from the filter device 30 according to a method disclosed above and explained in more details below, the valve 85 is actuated so that the port 86 is open. The extractor fan 95 may be activated to suction the particulate material 120 already dislodged from the filter device 30 and loosely lying, e.g., in cells or channels 35 of the filter device 30. The shape of the channels 35 may be tubular, and, e.g. the channel opening width may be approximately 2 mm. However, other dimensions of the channels may be appropriate.

Dislodging of at least a part of the trapped particulate material 120 from the filter device 30 may be achieved by generating one or more series of electric arc discharge pulses between a plurality of electrodes 100, 110 distributed within the filter 30. The series of electric arc discharged pulses 130, 135, 140 is generated so that pressure waves are produced, and that cause the particulate material 120 to be dislodged or separated from the filter 30. The one or more series of electric arc discharge pulses 130, 135, 140 may be generated when the engine (not shown) is shut off and, therefore, when no exhaust gas 40 is entering the filter element 30.

Fig. 2 shows a schematic perspective view of an exemplary embodiment of a filter device 30 which may be embodied, e.g. as a monolithic filter such as a monolithic ceramic filter. The filter device 30 may comprise a plurality of cells 35, 36 arranged in parallel to each other. In the exemplary embodiment of the filter device 30 shown in Fig. 2, the cells 35 are in fluid communication with the filter inlet 10. One end of each cell 35 is closed, e.g., by a plug 45. The plug 45 may be inserted into and fixed in the cell 35. As an alternative, the plug may be integrally formed with the cell 35.

The cells 36 may be in fluid communication with the filter outlet 15, and these cells 36 are provided with an end plug 45 on the opposite side of the end plugs 45 of the cells 35. The filter walls 55 separating the cells 35 from the cells 36 are designed and formed so that the particulate material 120 in the exhaust gas 40 entering the filter device 30 is trapped in filter walls 55. Hence, the filtered or purified exhaust gas 50 does not contain any particulate material 120, or only contains a reduced amount of particulate material 120 as compared to the exhaust gas 40 entering the filter device 30.

As shown in Fig. 2, a cell 35 is in fluid communication with the filter inlet 10 and is surrounded by the cells 36 which are in fluid communication with the filter outlet 15. In other words, in this exemplary embodiment of a filter device 30, cells 35 and cells 36 may be arranged in an alternating pattern.

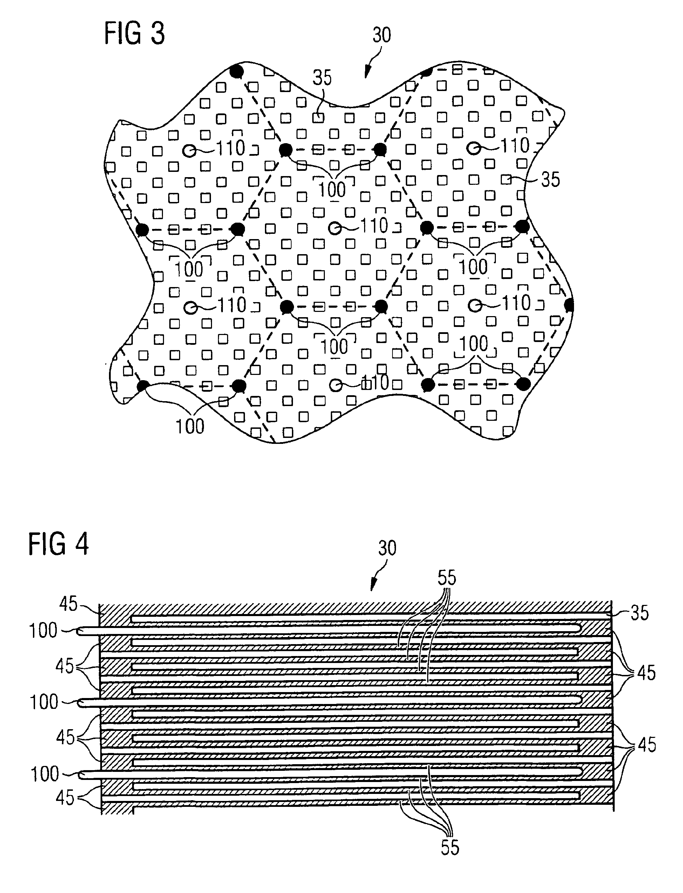

Fig. 3 relates to the arrangement of the electrodes 100, 110, e.g., within the filter device 30. It has to be noted that the arrangement of the electrodes 100, 110 shown in Fig. 3 is only one exemplary embodiment, and, of course, other patterns of arrangement of electrodes 100, 110 are possible. Here, electrodes 100, i.e. an electrode which may be connected to a terminal of a power supply 225, preferably a DC power supply, are arranged in a hexagonal pattern around an active electrode 110, i.e. an electrode which may be connected to a positive pole or terminal of the power supply 225. The above terminal may be connected with a negative pole of a power supply 225.

In certain embodiments, it might be appropriate to arrange electrodes 100 around an active electrode 110, e.g., in pentagonal, triangular or other patterns. A basic arrangement may include a electrode 100 in a spaced relationship with another active electrode 110. The series of electric arc discharge pulses 130, 135, 140 is generated between the electrodes 100 and the one or more active electrode(s) 110 wherein the electric arc discharge pulses 130, 135, 140 are so shaped or adapted such that pressure waves are produced which dislodge the particulate material 120 from the filter 30, e.g., due to pressure waves propagating through the filter, in particular the filter walls 55.

In the present exemplary embodiment of a filter arrangement 5 according to the present disclosure, the electrodes 100, e.g., a ground electrode, and the active electrodes 110 may be straight wire electrodes, but other forms of electrodes 100, 110 can be used, e.g., helical or spiral wire electrodes or the like.

Fig. 4 shows a representative arrangement of electrodes 100 within the filter device 30 in a longitudinal section of the filter device 30, e.g., as shown in Figs. 2 and 3. In the shown arrangement, two electrodes 100 are spaced from each other by a distance, e.g., of 5 channels 35, 36. However, other distances between two electrodes 100 may be appropriate, e.g. depending on the thickness of the filter walls 55, the material of the filter walls 55 etc. In another exemplary embodiment an electrode 100 may be arranged within every filter wall 55, or in every second or third or fourth, etc. wall 55. An active electrode may be disposed in a cell 35, e.g. not contacting a filter wall 55.

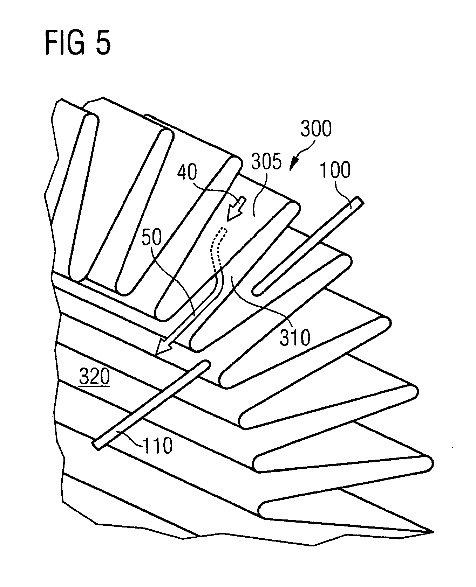

A further exemplary embodiment of a filtering device 300 is shown in Fig. 5. As an alternative to the filtering device shown in Fig. 2, a filtering device 300 has pleated filter walls 305, 310. The pleated filter walls 305, 310 may be arranged on a circle around a center line (not shown), e.g., of a cylinder shaped filtering device 300. An exhaust gas 40 contaminated with the particulate material 120 is required to pass from the outside of the filtering device 300 through the filter walls 305, 310 into an interior 20 of the filtering device 300. Upon passing the filter walls 305, 310, the purified exhaust gas 50 may be guided at one of the front ends of the filtering device 300 out off the filtering device 300. For dislodging or loosening the trapped particulate material from the filter walls 305, 310 at least one pair of electrodes 100, 110 is arranged, for example, on an outer side of the filtering device 300, and the inner side of the filtering device 300, respectively. Consequently, at least one filter wall 305, 310 is arranged between the two electrodes 100, 110. If at least one series of pulses according to the present disclosure is generated, electric arc discharges are generated and pressure waves are produced due to the special kind of series of electric arc discharge pulses, the pressure waves cause the particulate material 120 trapped in the filter walls 305, 310 to dislodge from the filter walls 305, 310.

In case that the filtering device 300 is arranged in a manner that its center line is vertically, the dislodged particulate material 120 may fall down due to the gravity and can be collected in a storage bag or the like. As an alternative, the dislodged particulate material 120 may be blown into a container or the like by, e.g., a fan (e.g. a low pressure fan) or any other suitable technical device. A further alternative may be that the dislodged particulate material is sucked by, e.g., a vacuum device or any other suitable technical device.

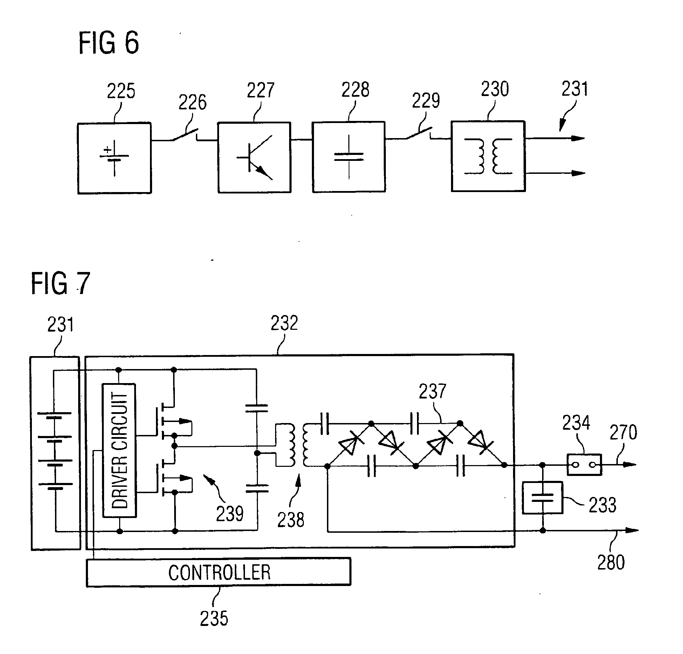

Fig. 6 shows a diagram of power supply components may be needed to reproduce the regeneration process although the process is not limited to being produced by these components alone. The energy is supplied by an electrical power source 225, which may conveniently be the battery of a vehicle or other local electrical source. The regeneration process is started by connecting this to the other power supply components through a switch 226. The switch 226 may be a physical connection or, more likely, an electronic device or control implementation embedded within a power converter assembly 227.

The power converter 227, where required, will convert the electrical power supplied by the electrical power source 225 into a form suitable for storage on an energy storage component 228. The energy storage component 228 would be conveniently a capacitor, although another storage devices or device is possible. The device 228 may be required to produce the current waveform at its output, as controlled by the user through a control strategy embedded within one of the components or externally. This may be accomplished by releasing the energy stored in the storage component(s) 228 using a second switch 229, which may be a physical implementation or be an embedded controlled component or process. The stored energy may need to pass through a second power converter device 230, which could conveniently be a transformer, in order to achieve the required voltage and current level.

In some implementations the converter, 230, may not be required. The output of the final stage is then connected physically to the electrodes 100, 110.

Fig. 7 shows one possible power supply topology. This power supply uses a battery as an energy source 231. The battery 231 is connected to a power converter 232 which converts the battery voltage into a higher voltage capable of powering the electrodes 100, 110 within the filter. The high voltage output may be modified by changing aspects of the power converter 232, subcircuits 237, 238, 239. The high voltage output of the converter 232 is current limited by the well known action of the sub-circuit 237. The sub-circuit 237 may be a diode voltage multiplier rectifier circuit. The output current of the sub-circuit 237 charges an energy storage capacitor 233. When the output discharge pulse is required, the capacitor is switched onto the electrodes (connections via 236) using a spark gap 234. The spark gap 234 may be controlled or self commutating, depending on the degree of control required.

The power supply operation uses the controller 235 which may be a microcontroller or a different analogue or digital circuit. The controller 235 determines the operation of a half bridge inverter 239 which drives the high voltage transformer 238. The regeneration system is turned on and off by the action of the controller.

This exemplary embodiment of a circuit for generating a series of electric arc discharge pulses is so designed that the electrodes 100, 110 connected to connecting lines 280 and 270, respectively produce electric arc discharges which in turn result in pressure waves within the filter device 30, 300. Preferably, the rising time rt of a pulse 130 causing the electric arc discharge may be quite short, for example 1 ns to 1000 ns, preferably about 10 ns to 200 ns, more preferably about 80 ns to 120 ns, even more preferably about 100 ns. The maximum amplitude of a pulse may be 1.00 MW to about 5.00 MW, preferably about 1.25 MW to 2.50 MW. The peak discharge current pulse may be greater than 100 A over a period of about 200 ns and the supply voltage may be up to 20 kV. Preferably the generated electric arc discharge pulses 130; 135; 140 have a peak pulse current of about 10 A to 1000 A, preferably about 100 A. A series of electric arc discharge pulses may include pulses 130; 135; 140 having a pulse energy release per arc length of about 0.1 mJ/mm to 100 mJ/mm, preferably between 1 mJ/mm to 10 mJ/mm. The pulse rise time rt of each electric arc discharge pulse 130; 135; 140 may be about 10⁻⁹ s to 10⁻⁷ s, preferably 10⁻⁸ s. The number of pulses may be up to 10⁶ per litre of filter volume, preferably 10³ pulses per litre to 10⁵ pulses per litre, preferably the pulse repetition rate is between about 5 Hz to 50 Hz, preferably about 10 Hz to 20 Hz. The filter volume is determined by the external dimensions of the filter.

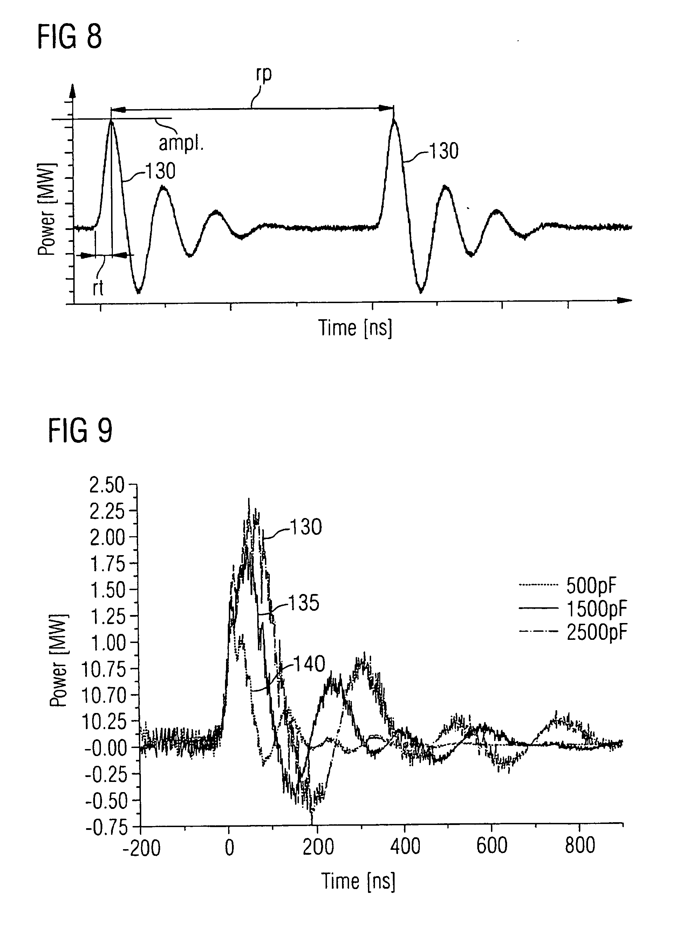

Fig. 9 shows various exemplary embodiments of a single electric arc discharge pulse 130, 135, 140 generated, e.g., by means of capacitors of 500 pF, 1500 pF, and 2500 pF.

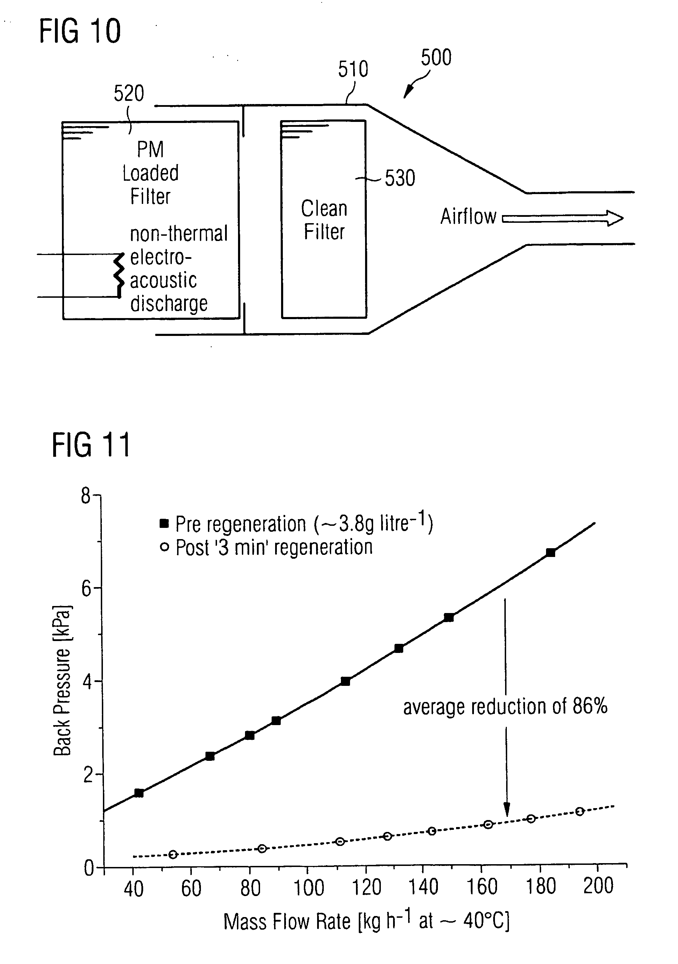

Fig. 10 is a schematic block diagram of a laboratory test filter arrangement adapted to demonstrate the method according to the present disclosure. The laboratory test filter arrangement 500 may comprise a housing 510 in which a filtering device 520 loaded with particulate material is arranged. Due to, e.g., an arrangement of electrodes 100, 110 within the filtering device 520 and producing at least one series of electric arc discharge pulses, particulate material may be dislodged from the filtering device 520 or any other surface where filtered material needs to be removed.

A clean filter 530 is arranged in a distance to the filtering device 520 downstream of the filtering device 520. The filtering device 520 is a 200 cpsi cordierite WFF loaded with particulate matter to 3.8 g/l. Particulate material was treated according to the present disclosure to dislodge the particulate material from the filter surface. A small domestic 600W vacuum cleaner was used to draw air through the filter, transferring the trapped particulate material into the second clean filter 530 to allow mass measurements of the amount of particulate material removed. Fifteen electric arc discharge pulses, with an average power consumption of 16 W each were applied successively to the filter for three minutes. Back pressure and mass measurements were used to determine the effect of the method treatment according to the present disclosure. This configuration was only used to audit the mass removal of the particulate material by collecting the particulate material removed from the loaded filtering device 520 which has to be regenerated, and collecting it in the filter 530 downstream and weighing the loss and gain in weight respectively.

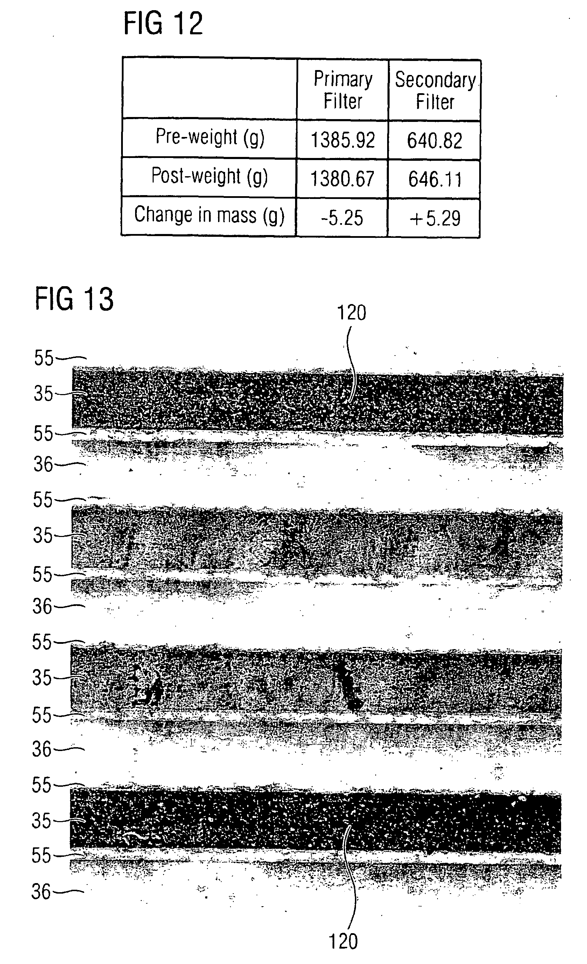

The table shown in Fig. 12 shows the change of mass of the two filters 520, 530. It shows that fifteen active electrodes supplied by a repetively pulse electric arc discharge for three minutes electric arc discharges removed about 5.3 g of particulate material from the primary filter 520. This reduces the back pressure of the filter by an average of 86 % between 50 and 200 kg/h as shown in Fig. 11. 0.5 to 1 g/per litre particulate material, (in particular 1.22-2.44 g) was within the filter's structure, corresponding to the depth bed filtration mode. This means that about 7.4 g of the trapped particulate material was in the cake layer. Given that only 72 % of the filter volume was treated with the method according to the present disclosure, the removal of about 5.3 g (71 %) of the cake layer indicates that the method according to the present disclosure is very effective at removing the particulate material cake layer with low power and over short durations.

Fig. 13 shows a longitudinal section of a filtering device 30 in which, as a result of the method according to the present disclosure, particulate material 120 was caused to dislodge from the filter walls 55 in some channels 35.

In the following further aspects of the present disclosure relating to an electrically variable spark gap and controlled distributor arrangement that could be an advantageous part of a filter regenerating arrangement according to the present disclosure are explained and described. Both of the following exemplary concepts may use the same foundation, a biasing supply to apply a bias voltage to an intermediate node of the spark gap. This may allow control of the voltage and energy of the pulse applied to the electrode in the filter without moving parts. The bias voltage can be readily controlled using conventional electronics and/or microprocessors.

It might be advantageous to be able to continuously vary the equivalent spark gap size to control the energy in the discharge and/or the voltage on the capacitor when the main discharge occurs. This is to maximise the regeneration rate while avoiding the non-autoselective regime when the energy and/or voltage is too large or too rapidly applied. The spark gap size could be physically changed/mechanically varied, however, an electrically varying spark gap is proposed that would allow the energy and/or voltage to be controlled without physically moving the spark gap. Such an arrangement may be more attractive to the heavy duty market as there will be no moving parts.

The following explanations summarise some tests that have been conducted to confirm the modes of operation of the electrically variable spark gap.

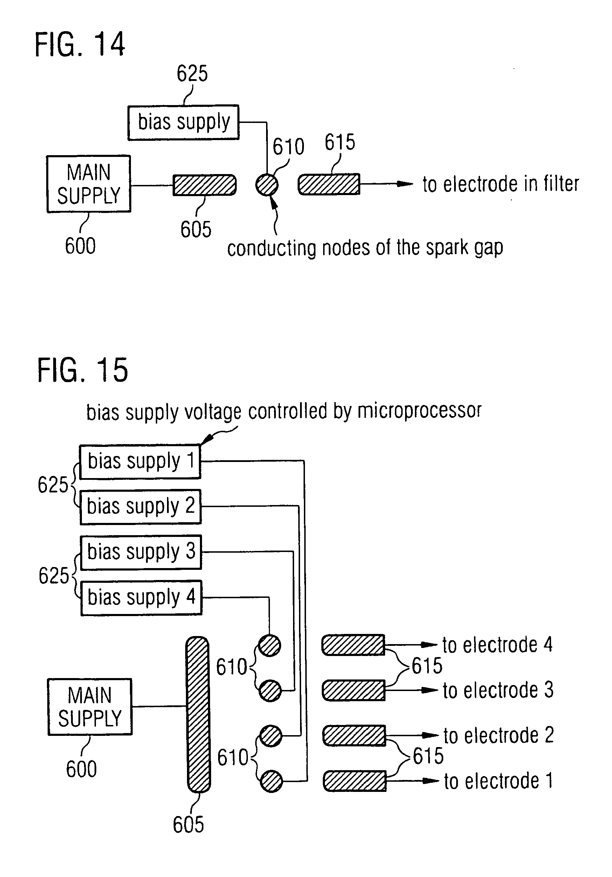

A schematic arrangement for generating an electrically variable spark gap is shown in Fig. 14. A main supply 600 may connect to a node 605. A conducting node 610 is arranged between the node 605 and another conducting node 615. The conducting node 615 may connect to an electrode in the filter. A bias supply 625 may be connected to the conducting node 610 of the spark gap.

Another schematic arrangement for generating an electrically variable spark gap is shown in Fig. 15. In contrast to the arrangement shown in Fig. 15, this arrangement may comprise a plurality of connecting nodes 610 and further connecting nodes 615. Each connecting node 610 of the spark gap may be connected to an individual bias supply 625. Each one of the connecting nodes 615 may be connected to an individual electrode.

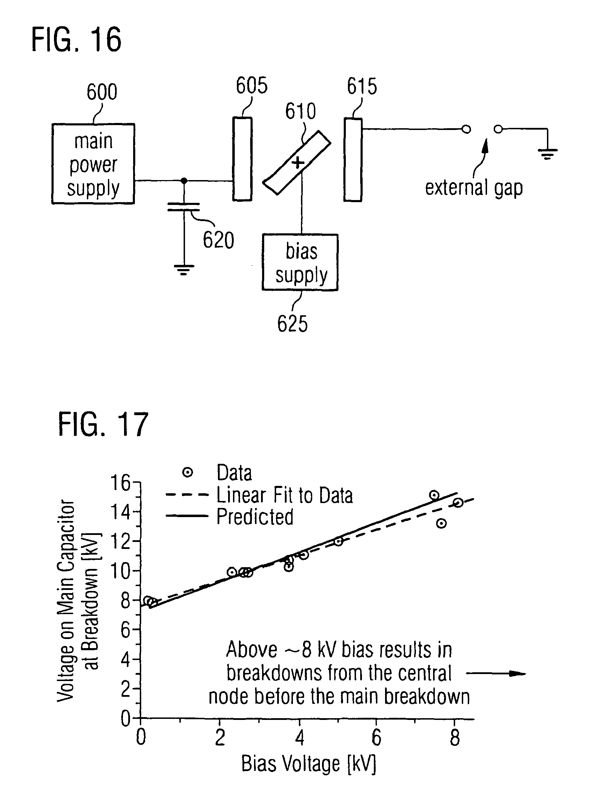

An experimental setup of an arrangement as shown in Fig. 15 is shown in Fig. 16. A rotatable spark gap (as may be used on the main aspects of this disclosure) was set to a gap of ∼3 mm on either side, shown in Figure 16. A node 605 is connected to the high voltage output 600, node 610 (central node) to the biasing high voltage 625 and node 615 to an external spark gap of ∼4 mm (where the filter and electrodes will normally be). A main energy storage capacitor 620 may be connected to the main power supply 600 and the node 605. The biasing voltage was set and the voltage at which breakdown occurred was recorded using a Tektronix 3032B oscilloscope with a Tektronix high voltage probe connected to node 610.

Fig. 17 shows the effect of increasing the positive bias voltage up to the point that the biasing circuit itself generates breakdowns (∼8 kV). The predicted line is simply based on the unbiased breakdown voltage (with biasing circuit connected) and the biasing circuit voltage. The difference is always assumed to be ∼7.5 kV and when broken down, the charge is shared across the final capacitors in the step-up circuit. This shows good correlation with the actual results, although a slight overprediction. The range achievable can be chosen by setting the physical separation of the spark gap nodes.

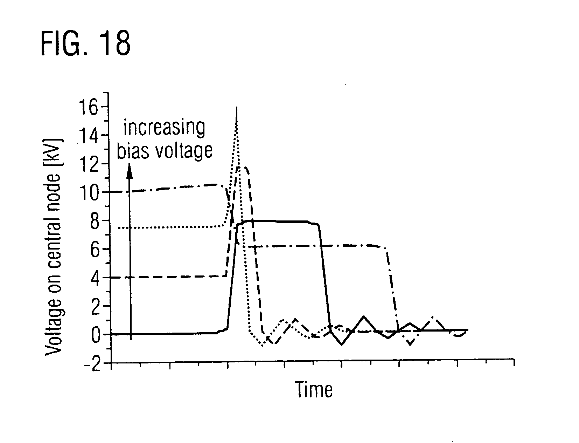

Fig. 18 shows a sketch of the different waveforms observed. It shows 4 waveforms which, from lowest biasing voltage to highest are:

1. a 'normal' discharge. The breakdown applies the voltage which then after a finite time breaks down the final gap and the voltage oscillates before settling at ∼0V.

2. as the biasing increases, the time before the final gap breaks down becomes smaller, but the overall waveform shape remains the same.

3. as the biasing current increases further (close to the maximum before breakdown), the voltage almost instantaneously breaks down all the gaps.

4. beyond the breakdown voltage several things can happen. The figure shows the breakdown to the floating side causing a sharing of charge from the capacitances and subsequent voltage drop. The main breakdown occurs shortly afterwards causing a drop to zero volts. This sometimes involves an increase in voltage (i.e. the breakdown is from node 605) or just a drop (just from node 615 to e.g. ground).

With respect to Fig. 18 it has to noted that the oscillations after the main breakdown were much smoother than shown.

These results may show that the system is behaving in the predicted mode if appropriate biasing voltages are applied. It is very predictable and should offer much finer control of equivalent spark gap size in research, testing as well as the proposed final system control. With a higher load, the very high biasing voltages (enough to get breakdowns) may be used more effectively as when this gap breaks down it will pull it to a much lower voltage - although the range of this mode will be limited.

This has shown that positive biasing may be very useful for controlling the voltage and, therefore energy in a electric discharge pulse as disclosed. A negative biasing of the central node is may give similar levels of control albeit, but requires a different biasing power supply topology.

### Industrial Applicability

The disclosed regeneration filter arrangement 5, shown in Fig. 1, may be used for regenerating a filtering device 30, or a filtering device 300, and/or other suitable filtering device or matter collection devices known in the art. Such devices may be useful in any applications where the removal of matter, e.g., particulate material or particulates, may be desired. For example, the method and arrangement disclosed may be used on diesel, gasoline, natural gas, and/or other combustion engines or furnaces known in the art. Other applications are also possible, e.g. in pharmaceutical industry for the generation of aerosols from particulate material. The disclosed method and apparatus may also be used in inhalers, heat exchangers, in particular clean heat exchangers, etc., and for fuel injector cleaning.

As discussed above, the disclosed method and arrangement 5 may in particular be used in conjunction with any work machine, on-road vehicle, off-road vehicle, stationary machine, and/or other exhaust-producing machine to remove matter from a filtering device mounted thereon.

During regeneration, the filtering device 30, 300 may be kept in its normal operating position. However, it is also possible to mount a filtering device 30, 300 in a replaceable manner, and to remove a filtering device 30, 300 loaded with particulate matter to install it in a stationary regenerating apparatus. In such a stationary regenerating apparatus a number of electrodes 100, 110 may be arranged such that the filtering device 30, 300 may be inserted and then, subsequently, one or more series of electric arc discharge pulses are generated according to the disclosed method causing pressure waves propagating through the filtering device 30, 300, and, thereby, the particulate matter 120 is being dislodged.

The disclosed method and apparatus may be characterized by the electric arc discharge which loosens the particulate material, e.g., the soot and/or ash etc., so it can be, e.g., subsequently, removed with much less pressure or flow requirements than processes that do not use the disclosed method.

The soot and/or ash and/or other particulate material may be gathered in a separate or incorporated container, e.g. a container as mentioned above. If a separate regenerating apparatus is provided, the particulate material dislodged from the filtering device 30, 300 may be blown out of the filtering device 30, 300, or the dislodged particulate material 120 may be sucked in an associated container, e.g., by a blowing fan or vacuum device. For removing particulate material 120 from the filtering device 30, 300 an internal combustion engine (not shown) may be turned off causing that combustion ceases and there is no exhaust flow from the internal combustion engine to its exhaust conduit 20. The valve 85 may be actuated by a controller (not shown), machine operator or technician to open the port 86 of the branch line 80 connecting the filtering inlet 10 to the storage container 90. Subsequently, the filtering device 30, 300 may be regenerated by actuating the pulse generator device 70.

Alternatively, the opening of the port 86 via the valve 85 may be conducted after the particulate material being dislodged, i.e. actuating the pulse generating device 70, so that after the particulate matter 120 being partly or fully dislodged from the filtering device 30, 300, a connection between the filtering inlet and the storage container 90 is created.

The dislodging of the trapped particulate matter 120 from the filtering device 30, 300 may comprise the generation of at least one series of electric arc discharge pulses, which might have a defined repetition rate and includes a number of identical or similar pulses according to the defined repetition rate. Between one series of electric arc discharge pulses and a following series of electric arc discharge pulses a defined time period may be set. In an exemplary embodiment of the present method one series of electric arc discharge pulses is generated until a desired amount of particulate matter 120 or a defined percentage of estimated particulate matter 120 trapped in the filtering device 30, 300 may be dislodged.

For example, a series of electric arc discharge pulses may be generated for the time period of a few seconds up to a few hours. In another exemplary embodiment one series of electric arc discharge pulses is generated for about a few seconds to about a few minutes, and a following other series of electric arc discharge pulses having the same or another repetition rate may follow for another or the same time period.

The number of series of electric arc discharge pulses and/or a repetition rate and/or the amplitude and rising time of a pulse of a series of electric arc discharge pulses may be adapted to obtain an optimized regeneration of a filtering device 30, 300. For example, the rising time of each electric arc discharge pulse of a series of electric arc discharge pulses may be within a range of about 1 ns to 1000 ns or more, preferably about 100 ns, more preferably 5 ns to 50 ns, more preferably about 10 ns.

It has to be noted that each and every intermediate value within the ranges mentioned above are part of the disclosed method. The step of removing the dislodged particulate matter 120 from the filtering device 30, 300 may follow between two subsequent series of electric arc discharge pulses, or after termination of generating the one or more series of electric arc discharge pulses. The removal of the dislodged particulate matter 120 may be carried out alternately with one or more series of discharge pulses or after termination of dislodging particulate matter 120 from the filtering device 30, 300.

If the dislodged particulate matter 120 has to be removed the extraction fan 95 may be activated to suck the dislodged particulate matter 120 within the channels 35 out of the filtering device 30. It may be also possible to suck the dislodged material 120 out from the outside of the filtering device 300. A fan or extractor could potentially be a fan or blower feeding air to the other side of the filter and used to blow the particulate material out of the filter.

When the dislodged particulate matter 120 is transferred to the container 90 the container 90 may be discharged, or the whole container 90 may be disconnected from the branch line 80 to discharge the container 90 at another place or regenerated in situ.

As mentioned above at least one series of electric arc discharge pulses may be generated to dislodge particulate material 120 from a filtering device 30, 300 by producing electric arc discharges causing pressure waves propagating through the filtering device 30, 300. The rise time rt and/or the maximum amplitude amp and/or the number of pulses and/or the number of series of electric arc discharge pulses may influence the generation of pressure waves propagating through the filtering device 30, 300.

The presented method and the regeneration filter arrangement 5 may result in a lower energy consumption compared to the known systems. Furthermore, an advantage may be that less CO₂ is produced. In addition, less or even no ash may be left in the filter. The presented method may result in a lower maximum temperature for which the filtering device 30, 300 has to be designed, and, therefore, a filtering device may consist of less expensive and/or more effective materials.

Generally speaking, according to the present disclosure, the dislodged particulate material, e.g. soot and/or ash, may be removed from the filter after the particulate material was dislodged by the special electric arc discharge pulse(s) or at least one special series of electric arc discharge pulses. In other words, a core of the present disclosure may be the use of at least one special electric arc discharge which results in dislodging particulate material from the filter without burning the particulate material. Consequently, the disclosed method may be a method for regenerating any filter adapted to remove particulate material from a gas by relatively low temperatures compared to prior art solutions where the particulate material is burned. The particulate material trapped in the filter will, therefore, not be burned but rather mechanically knocked out of the filter.

According to an aspect of the disclosed method the "autoselectivity" may be important in that an electric arc discharge locates on particles of soot i.e. where it is of most use, not on a clean filter surface. However, even in case a filter is not loaded with soot but with other particulate material as, e.g., ash or other contaminations, the disclosed method may work. Hence, the removal of ash may an additional advantage of the disclosed method and apparatus, as at present ash formation limits the life of particulate filters as, e.g., a diesel particulate filter, and the present disclosure may allows them to be used longer.

Another aspect is that the disclosed apparatus method may be compact, and both the disclosed method and the apparatus could be low cost.

Although the preferred embodiments of this invention have been described herein, improvements and modifications may be incorporated without departing from the scope of the following claims.

The following further aspects of the present disclosure may lead to the ability to clean a filter under very heavily loaded conditions, which may was not previously possible using other regeneration processes. In addition, a reduction of the number of electrodes and power supply components may be possible.

In cases where particulate material loading is very high a parasitic electrical loading on the power supply may cause a shift of regeneration modes to a slower, more diffuse agitation of the particulate material, which is still effective at cleaning the filter. With a secondary regeneration mode there appears to be no upper limit to soot loading using this approach. Accordingly, in one further aspect one or more regeneration modes may be used to clean a filter.

A further aspect of the present disclosure may include the provision of a variable spark gap enabling the electrical parameters of the discharge (e.g. voltage, current, power and energy) to be controlled and regeneration kept optimum throughout the regeneration event. This could be in the form of an electrically variable spark gap (i.e. no moving parts) to give the control described above that can be microprocessor controlled using an intermediate node within the spark gap positively or negatively biased.

Another aspect of the present disclosure may include the use of an electrically controlled spark gap distributor which may allow multiple outputs to be driven from one high voltage supply giving a significant reduction in the power supply components and power supply size. This may be achieved by positive or negative biasing of one or more electrodes or intermediate nodes of the spark gap to generate preferential discharge locations (i.e. it may use similar technology and concepts as the electrically variable spark gap).

Another aspect of the present disclosure may include creating preferential discharge locations by partially ionising the gas in a preferred location enabled by shaping of the applied electric current.

Creating preferential discharge locations may be achieved by actively generating a glow discharge (partially ionised region) moving around using e.g. the gas flow allowing e.g. use of a discharge disclosed above to clean metal surfaces such as metal heat exchanger. This may enable the use of the disclosed method for regenerating or cleaning any kind of a particulate collecting surface or preferably a filter and the use of a filter regenerating arrangement disclosed herein in environments where there would normally be only a single preferential discharge location and cleaning would maybe not work. This may add some more weight to the heat exchanger example mentioned above. The secondary regeneration mode may also be very effective at removing surface particulates from any surface, including heat exchangers.

According to a second alternative, creating preferential discharge locations may be achieved by forcing a current flow through the particulate material layer immediately before the main pulse will locally ionise the gas within and immediately surrounding the porous particulate material. This may preferentially cause ionisation in regions containing particulate material and, therefore, may promote the auto-selectivity of one or more electric arc discharge pulses each being adapted to generate at least one electric arc discharge in the filter and thereby at least one pressure wave that dislodges the particulate material trapped in the filter from the filter.

In accordance with an exemplary embodiment of a method for regenerating a filter adapted to remove particulate material from a gas, the method may comprise producing at least one electric arc discharge pulse, the at least one electric arc discharge pulse being adapted to generate at least one electric arc discharge in the filter and thereby at least one pressure wave that dislodges the particulate material trapped in the filter from the filter.

Another exemplary embodiment of the disclosed method for regenerating a filter may further comprise removing the dislodged particulate material from the filter, preferably by blowing away or suction.

Another exemplary embodiment of the disclosed method for regenerating a filter may further comprise producing at least one series of electric arc discharges in the filter caused by at least one series of electric arc discharge pulses, the at least one series of electric arc discharge pulses being adapted to generate pressure waves that dislodge the particulate material trapped in the filter from the filter. The at least one electric arc discharge pulse may has a minimum peak pulse current of about 10 A, preferably about 20 A to 50 A and/or a maximum peak pulse current of about 1000 A, preferably about 100 A. The electric arc discharge pulses may include pulses having a pulse energy release per electric discharge length of about 0.1 mJ/mm to 100 mJ/mm, preferably between 1 mJ/mm to 10 mJ/mm.

Another exemplary embodiment of the disclosed method for regenerating a filter may include one or more electric arc discharge pulse having a pulse rise time of about 10⁻⁹ s to 10⁻⁷ s, preferably 10⁻⁸ s.

Another exemplary embodiment of the disclosed method for regenerating a filter may generate a number of pulses up to 10⁶ per litre of filter volume, preferably 10³ pulses per litre to 10⁵ pulses per litre, and/or preferably the pulse repetition rate is between about 5 Hz to 50 Hz, preferably about 10 Hz to 20 Hz.

Another exemplary embodiment of the disclosed method for regenerating a filter may comprise reiterating the sequence of producing the at least one series of electric arc discharge pulses.

Another exemplary embodiment of the disclosed method for regenerating a filter may include at least one electric discharge pulse having a pulse width of about 1 to 1000 ns, preferably 10 to 500 ns, more preferably about 50 ns.

Another exemplary embodiment of the disclosed method for regenerating a filter may include at least one electric discharge pulse having a minimum pulse height of about 2 A, more preferably 10 A, 20 A to 50 A, or even more.

Another exemplary embodiment of the disclosed method for regenerating a filter may comprise arranging at least one first electrode and at least one second electrode, and generating electric arc discharges between the at least one first electrode and the at least one second electrode by the at least electric arc discharge pulse, preferably the at least one series of electric arc discharge pulses.

Another exemplary embodiment of the disclosed method for regenerating a filter may comprise generating electric arc discharges between the at least one first and second electrodes at or through at a filter wall by the at least one electric arc discharge pulse, preferably the at least one series of electric arc discharge pulses.

Another exemplary embodiment of the disclosed method for regenerating a filter may comprise regenerating an engine particulate filter, e.g. a diesel engine particulate filter. The particulate material may include engine fuel combustion products, such as diesel engine particulate material and/or soot and/or ash.

In accordance with an exemplary embodiment of a filter regenerating arrangement, the filter regenerating arrangement may comprise a pulse generating device adapted to generate at least one electric arc discharge pulse. The at least one electric arc discharge pulse is adapted to generate at least one electric arc discharge and thereby at least one pressure wave within a filter that causes particulate material trapped in the filter to be dislodged from the filter.

Another exemplary embodiment of the disclosed filter regenerating arrangement may further comprise a particulate removing device adapted to remove the dislodged particulate material from the filter. The pulse generating device can be adapted to generate at least one series of electric arc discharge pulses, the series of electric arc discharge pulses being adapted to generate electric arc discharges and thereby pressure waves within a filter that causes particulate material trapped in the filter to be dislodged from the filter.

Another exemplary embodiment of the disclosed filter regenerating arrangement may further comprise a filter having at least one filter wall having an inlet side adapted to trap particulate material and an outlet side opposite the inlet side, and at least one first electrode and at least one second electrode which electrodes are adapted to produce electric arc discharges within the filter. The at least one first electrode, in particular a ground electrode, can be arranged in the filter, and at least one second electrode, preferably an active electrode, can be arranged at a distance to the first electrode.

Another exemplary embodiment of the disclosed filter regenerating arrangement may further comprise a plurality of first electrodes connected with each other and/or a plurality of second electrodes connected with each other. The plurality of second electrodes may be uniformly distributed at a distance to the at least one first electrode.

Another exemplary embodiment of the disclosed filter regenerating arrangement may further comprise several first electrodes arranged in the filter and each first electrode may be associated with two or more second electrodes which are at a distance to the respective first electrode.

Another exemplary embodiment of the disclosed filter regenerating arrangement may further comprise a pulse generating device including a voltage supply, preferably a DC voltage supply, and at least one group of electrodes comprising at least one first electrode and at least one second electrode. The at least one first electrode can be connected to a high voltage terminal and the at least one second electrode of the same group of electrodes can be connected to ground.

Another exemplary embodiment of the disclosed filter regenerating arrangement may further comprise an inverter adapted to change the polarity of the terminals.

Another exemplary embodiment of the disclosed filter regenerating arrangement may further comprise a particulate removing device including a blower device, preferably a low pressure blower, adapted to blow the dislodged particulate material out of the filter into a storage device.

Another exemplary embodiment of the disclosed filter regenerating arrangement may further comprise a particulate removing device including a suction device adapted to suck the dislodged particulate material into a storage device.

Another exemplary embodiment of the disclosed filter regenerating arrangement may further comprise a pulse generating device adapted to generate electric arc discharge pulses each having a minimum peak pulse current of about 10 A and/or a maximum peak pulse current of about 1000 A, preferably about 100 A.

Another exemplary embodiment of the disclosed filter regenerating arrangement may further comprise a pulse generating device adapted to generate at least one series of electric arc discharge pulses including pulses having a pulse energy release per electric arc discharge length of about 0.1 mJ/mm to 100 mJ/mm, preferably between 1 mJ/mm to 10 mJ/mm. The pulse generating device may be adapted to generate electric arc discharge pulses each having a pulse rise time of about 10⁻⁹ s to 10⁻⁷ s, preferably 10⁻⁸ s.

Another exemplary embodiment of the disclosed filter regenerating arrangement may further comprise a pulse generating device adapted to generate at least one series of electric arc discharge pulses wherein the number of pulses is up to 10⁶ per litre of filter volume, preferably 10³ pulses per litre to 10⁵ pulses per litre, preferably having a pulse repetition rate of about 5 Hz to 50 Hz, preferably 10 Hz to 20 Hz.

Another exemplary embodiment of the disclosed filter regenerating arrangement may further comprise a filter adapted to remove particulate material from a gas, e.g. a monolithic particulate filter.

In accordance with another aspect of the present disclosure a diesel particulate filter may consist of a filter material adapted to trap particulate material, wherein the filter material has a maximum temperature resistance of about 600 °C, preferably of about 500 °C to 550 °C, or more preferably of about 400 °C to 450 °C.

Another exemplary embodiment of the disclosed diesel particulate filter may further comprise at least one pair of electrodes adapted to generate electric arc discharges in the filter caused by at least one electric arc discharge pulse, and, thereby, causing that at least one pressure wave is generated within the filter resulting in the particulate material trapped in the filter is being dislodged from the filter. The filter material may be selected from the group consisting of ceramic, preferably cordierite, and paper.

In accordance with another aspect of the present disclosure at least one electric arc discharge configured to not burn a particulate material trapped in a filter but to dislodge the particulate material trapped in the filter from the filter is used to regenerate the filter.

## Claims

1. A method for regenerating a filter (30; 300) adapted to remove particulate material (120) from a gas (40), the method comprising the following method step:
producing at least one series of electric arc discharge pulses (130; 135; 140), the at least one series of electric arc discharge pulses (130; 135; 140) being adapted to generate at least one series of electric are discharges in the filter (30; 300) and thereby pressure waves that dislodge, but not burn the particulate material (120) trapped in the filter (30; 300) from the filter (30; 300).

2. The method of claim 1, further comprising using an electrically controlled spark gap distributor adapted to control the voltage and energy of the pulses applied to an electrode in the filter (30; 300) and adapted to allow multiple outputs to be driven from one high voltage supply, preferably achieved by positive or negative biasing of one or more electrodes or intermediate nodes of the spark gap to generate preferential discharge locations.

3. The method of claims 1 or 2, further comprising creating preferential discharge locations by partially ionising gas in a preferred location, preferably by actively generating a glow discharge moving around using e.g. the gas flow, or by forcing a current flow through the particulate material layer immediately before the main pulse, locally ionising the gas within and immediately surrounding the porous particulate material.

4. The method of one or more of the preceding claims, wherein:
each electric arc discharge pulse (130; 135; 140) has a minimum peak pulse current of about 10 A, preferably about 20A to 50 A and/or a maximum peak pulse current of about 1000 A, preferably about 100 A, the electric arc discharge pulses include pulses (130; 135; 140) having a pulse energy release per electric discharge length of about 0.1 mJ/mm to 100 mJ/mm, preferably between 1 mJ/mm to 10 mJ/mm, the pulse rise time (rt) of each electric arc discharge pulse (130; 135; 140) is about 10⁻⁹ s to 10⁻⁷ s, preferably 10⁻⁸ s,
preferably the number of pulses is up to 10⁶ per litre of filter volume, preferably 10³ pulses per litre to 10⁵ pulses per litre, and/or preferably the pulse repetition rate is between about 5 Hz to 50 Hz, preferably about 10 Hz to 20 Hz,
the pulse width is about 1 to 1000 ns, preferably 10 to 500 ns, more preferably about 50 ns, and
a minimum pulse height is about 10 A.

5. A filter regenerating arrangement (5), comprising: a pulse generating device (70) adapted to generate at least one series of electric arc discharge pulses (130; 135; 140), the at least one series of electric arc discharge pulses (130; 135; 140) being adapted to generate at least one series of electric arc discharges and thereby at least one series of pressure waves within a filter (30; 300) that causes particulate material (120) trapped in the filter (30; 300) to be dislodged from the filter (30; 300), but not to be burned.

6. The filter regenerating arrangement of claim 5, further comprising:
a filter (30; 300);
at least one first electrode (100). -in particular a ground electrode, the at least one first electrode (100) being arranged in the filter (30: 300); and
at least one second electrode (100), the at least one second electrode (110), preferably an active electrode (110), being at a distance to the first electrode (100).

7. The filter regenerating arrangement of claim 6, wherein:
a plurality of first electrodes (100) are connected with each other and/or a plurality of second electrodes (110) are connected with each other, and the plurality of second electrodes (110) are uniformly distributed at a distance to the at least one first electrode (100).

8. The filter regenerating arrangement of one or more of claims 5-7, wherein:
several first electrodes (100) are arranged in the filter (30; 300) and each first electrode (100) is associated with two or more second electrodes (110) which are at a distance to the respective first electrode (100);
the pulse generating device (70) comprises a voltage supply (225), preferably a DC voltage supply, and at least one group of electrodes comprising at least one first electrode (100) and at least one second electrode (110), wherein the at least one first electrode (100) is connected to a high voltage terminal and the at least one second electrode (110) of the same group of electrodes are connected to ground; and
the filter arrangement further comprises an inverter (205) adapted to change the polarity of the terminals.

9. The filter regenerating arrangement of one or more of claims 5-8, wherein:
the pulse generating device (70) is adapted to generate electric arc discharge pulses each having a minimum peak pulse current of about 10 A and/or a maximum peak pulse current of about 1000 A, preferably about 100 A, the pulse generating device (70) is adapted to generate at least one series of electric arc discharge pulses including pulses (130; 135; 140) having a pulse energy release per electric arc discharge length of about 0.1 mJ/mm to 100 mJ/mm, preferably between 1 mJ/mm to 10 mJ/mm;
the pulse generating device (70) is adapted to generate electric arc discharge pulses each having a pulse rise time of about 10⁻⁹ s to 10⁻⁷ s, preferably 10⁻⁸ s; and
the pulse generating device (70) is adapted to generate at least one series of electric arc discharge pulses (130; 135; 140) wherein the number of pulses is up to 10⁶ per litre of filter volume, preferably 10³ pulses per litre to 10⁵ pulses per litre, preferably having a pulse repetition rate of about 5 Hz to 50 Hz, preferably 10 Hz to 20 Hz.

10. The filter regenerating arrangement of one or more of claims 5-9, further comprising a variable spark gap adapted to control the electrical parameters of the discharge and regeneration, preferably in the form of an electrically variable spark gap.

11. The filter regenerating arrangement of claim 10, further comprising an intermediate node within the spark gap positively or negatively biased.

12. The filter regenerating arrangement of any one of claims 5-11, further comprising an electrically controlled spark gap distributor adapted to control the voltage and energy of the pulses applied to an electrode in the filter (30; 300) and adapted to allow multiple outputs to be driven from one high voltage supply, preferably achieved by positive or negative biasing of one or more electrodes or intermediate nodes of the spark gap to generate preferential discharge locations.

13. A diesel particulate filter (30, 300), comprising:
a filter material (55) adapted to trap particulate material, wherein the filter material has a maximum temperature resistance of about 600 °C, preferably of about 500 °C to 550 °C, or more preferably of about 400 °C to 450 °C.
at least one pair of electrodes (100, 110) adapted to generate electric arc discharges caused by at least one series of electric arc discharge pulses (130; 135; 140), and, thereby, causing that at least one series of pressure waves is generated within a filter (30; 300) resulting in the particulate material (120) trapped in the filter (30; 300) is being dislodged from the filter (30; 300), the at least one series of electric arc discharge pulses being configured such that the generated electric arc discharges do not burn the particulate material trapped in the filter (30; 300).

## Patentansprüche

1. Verfahren zum Regenerieren eines zum Entfernen von partikelförmigen Material (120) aus einem Gas (40) geeigneten Filters (30; 300), wobei das Verfahren den folgenden Verfahrensschritt aufweist:
Erzeugen von wenigstens einer Reihe von Lichtbogenentladungspulsen (130; 135; 140), wobei die wenigstens eine Reihe von Lichtbogenentladungspulsen (130; 135; 140) dazu angepasst ist, wenigstens eine Reihe von Lichtbogenentladungen in dem Filter (30; 300) und dadurch Druckwellen zu erzeugen, die das in dem Filter (30; 300) eingefangene, partikelförmige Material (120) aus dem Filter (30; 300) lösen, aber nicht verbrennen.

2. Verfahren nach Anspruch 1, ferner umfassend: Verwenden eines elektrisch gesteuerten Funkenstreckenverteilers, der die Spannung und Energie des an einer Elektrode in dem Filter (30; 300) aufgebrachten Pulses steuern kann und der es ermöglicht, dass mehrere Ausgänge von einer Hochspannungsversorgung angetrieben werden, was vorzugsweise durch positive oder negativ Vorspannung von einer oder mehreren Elektroden oder Zwischenpunkten der Funkenstrecke zum Erzeugen von bevorzugten Entladungspositionen erreicht wird.

3. Verfahren nach Anspruch 1 oder 2, ferner umfassend: Erzeugen bevorzugter Entladungspositionen durch teilweises Ionisieren des Gases an einer bevorzugten Stelle, vorzugsweise durch aktives Erzeugen einer sich umherbewegenden Glimmentladung, beispielsweise durch Verwenden der Gasströmung oder durch Erzwingen eines Stromflusses durch die partikelförmige Materialschicht unmittelbar vor dem Hauptpuls, der das Gas lokal im Inneren ionisiert und unmittelbar das poröse, partikelförmige Material umgibt.

4. Verfahren nach einem oder mehreren der vorhergehenden Ansprüche, wobei:
jeder elektrische Lichtbogenentladungspuls (130; 135; 140) einen minimalen Spitzen-Pulsstrom von ungefähr 10 A, vorzugsweise ungefähr 20 A bis 50 A und/oder einen maximalen Spitzen-Pulsstrom von ungefähr 1000 A, vorzugsweise ungefähr 100 A hat, wobei die Lichtbogenentladungspulse Pulse (130; 135; 140) umfassen, die eine Pulsenergieentladung pro elektrischer Entladungslänge von ungefähr 0,1 mJ/mm bis 100 mJ/mm, vorzugsweise zwischen 1 mJ/mm bis 10 mJ/mm haben, wobei die Pulsanstiegszeit (rt) von jedem Lichtbogenentladungspuls (130; 135; 140) ungefähr 10⁻⁹ s bis 10⁻⁷ s, vorzugsweise 10⁻⁸ s beträgt,
vorzugsweise die Anzahl der Pulse bis zu 10⁶ pro Liter des Filtervolumens beträgt, vorzugsweise 10³ Pulse pro Liter ist und/oder vorzugsweise die Pulswiederholungsrate zwischen ungefähr 5 Hz bis 50 Hz, vorzugsweise 10 Hz bis 20 Hz beträgt,
die Pulsweite ungefähr 1 bis 1000 ns, vorzugsweise 10 bis 500 ns, noch bevorzugter ungefähr 50 ns beträgt, und
eine minimale Pulshöhe 10 A beträgt.

5. Filterregenerationsvorrichtung (5) mit:
einem Pulserzeugungsgerät (70), das wenigstens eine Reihe von Lichtbogenentladungspulsen (130; 135; 140) erzeugen kann, wobei die wenigstens eine Reihe von Lichtbogenentladungspulsen (130; 135; 140) geeignet ist, wenigstens eine Reihe von Lichtbogenentladungen und dadurch wenigstens eine Reihe von Druckwellen in einem Filter (30; 300) zu erzeugen, die das in dem Filter (30; 300) eingefangene, partikelförmige Material (120) aus dem Filter (30; 300) lösen, aber nicht verbrennen zu werden.

6. Filterregenerationsvorrichtung nach Anspruch 5 ferner mit:
einem Filter (30; 300);
wenigstens einer ersten Elektrode (100), insbesondere einer Masseelektrode, wobei die wenigstens eine erste Elektrode (100) in dem Filter (30; 300) angeordnet ist; und
wenigstens einer zweiten Elektrode (100), wobei die wenigstens eine zweite Elektrode (110), vorzugsweise eine aktive Elektrode (110) ist, die in einem Abstand von der ersten Elektrode (100) angeordnet ist.

7. Filterregenerationsvorrichtung nach Anspruch 6, wobei
eine Mehrzahl von ersten Elektroden (100) miteinander verbunden sind und/oder eine Mehrzahl von zweiten Elektroden (110) miteinander verbunden sind, und wobei die Mehrzahl von zweiten Elektroden (110) gleichmäßig über eine Distanz zu der wenigstens einen ersten Elektrode (100) verteilt sind.

8. Filterregenerationsvorrichtung nach einem oder mehreren der Ansprüche 5 bis 7, wobei:
mehrere erste Elektroden (100) in dem Filter (30; 300) angeordnet sind und jede erste Elektrode (100) zwei oder mehreren zweiten Elektroden (110), die von der jeweiligen ersten Elektroden (100) in einem Abstand angeordnet sind, zugeordnet ist;
das Pulserzeugungsgerät (70) eine Spannungsversorgung (225), vorzugsweise eine Gleichspannungsversorgung, und wenigstens eine Gruppe von Elektroden mit wenigstens einer ersten Elektrode (100) und wenigstens einer zweiten Elektrode (110) umfasst, wobei die wenigstens eine erste Elektrode (100) mit einem Hochspannungsanschluss verbunden ist und die wenigstens eine zweite Elektrode (110) der gleichen Gruppe von Elektroden geerdet ist; und
die Filtervorrichtung weiterhin einen Wechselrichter (205) umfasst, der dazu angepasst ist, die Polarität der Anschlüsse zu ändern.

9. Filterregenerationsvorrichtung nach einem oder mehreren der Ansprüche 5 bis 8, wobei:
das Pulserzeugungsgerät (70) geeignet ist, Lichtbogenentladungspulse zu erzeugen, von denen jeder einen minimalen Spitzen-Pulsstrom von ungefähr 10 A und/oder einen maximalen Spitzen-Pulsstrom von ungefähr 1000 A, vorzugsweise ungefähr 100 A, aufweist, wobei das Pulserzeugungsgerät (70) wenigstens eine Reihe von Lichtbogenentladungspulsen erzeugen kann, die Pulse (130; 135; 140) mit einer Pulsenergieabgabe pro Lichtbogenentladungslänge von ungefähr 0,1 mJ/mm bis 100 mJ/mm, vorzugsweise zwischen 1 mJ/mm bis 10 mJ/mm aufweisen;
das Pulserzeugungsgerät (70) geeignet ist, Lichtbogenentladungspulse zu erzeugen, von denen jeder eine Pulsanstiegszeit von ungefähr 10⁻⁹ s bis 10⁻⁷ s, vorzugsweise 10⁻⁸ s, aufweisen;
das Pulserzeugungsgerät (70) geeignet ist, wenigstens eine Reihe von Lichtbogenentladungspulsen (130; 135; 140) zu erzeugen, wobei die Anzahl der Pulse bis zu 10⁶ pro Liter Filtervolumen beträgt, vorzugsweise 10³ Pulse pro Liter bis 10⁵ Pulse pro Liter, vorzugsweise mit einer Pulswiederholungsrate von ungefähr 5 Hz bis 50 Hz, vorzugsweise 10 Hz bis 20 Hz.

10. Filterregenerationsvorrichtung nach einem oder mehreren der Ansprüche 5 bis 9, ferner mit einer variablen Funkenstrecke, die dazu angepasst ist, die elektrischen Parameter der Entladung und Regeneration zu steuern, vorzugsweise in der Form einer elektrisch variablen Funkenstrecke.

11. Filterregenerationsvorrichtung nach Anspruch 10, ferner mit einem Zwischenpunkt innerhalb der Funkenstrecke, der mit einer positiven oder negativen Vorspannung beaufschlagt ist.

12. Filterregenerationsvorrichtung nach einem der Ansprüche 5 bis 11, ferner mit einem elektrisch gesteuerten Funkenstreckenverteiler, der geeignet ist, die Spannung und Energie des Pulses, der auf eine Elektrode in dem Filter (30; 300) aufgebracht wird, zu steuern, und geeignet ist, es zu ermöglichen, von mehreren Ausgängen einer Hochspannungsversorgung angetrieben zu werden, vorzugsweise erreicht durch positive oder negative Vorspannung von einer oder mehreren Elektroden oder Zwischenpunkten der Funkenstrecke zum Erzeugen bevorzugter Entladungspositionen.

13. Dieselpartikelfilter (30, 300) mit:
einem Filtermaterial (55), das dazu angepasst ist, partikelförmiges Material einzufangen, wobei das Filtermaterial eine maximalen Temperaturbeständigkeit von ungefähr 600°C, vorzugsweise von 500°C bis 550°C, oder noch bevorzugter 400°C bis 450°C, aufweist,
wenigstens einem Elektrodenpaar (100; 110), das geeignet ist, Lichtbogenentladungen, die durch wenigstens eine Reihe von Lichtbogenentladungspulsen (130; 135; 140) verursacht sind, zu erzeugen und dadurch zu verursachen, dass wenigstens eine Reihe von Druckwellen innerhalb eines Filters (30; 300) erzeugt wird, wodurch das in dem Filter (30; 300) eingefangene, partikelförmige Material (120) aus dem Filter (30; 300) gelöst wird, wobei die wenigstens eine Reihe von Lichtbogenentladungspulsen derart ausgebildet ist, dass die erzeugten Lichtbogenentladungen das in dem Filter (30; 300) eingefangene, partikelförmige Material nicht verbrennt.

## Revendications

1. Procédé de régénération d'un filtre (30 ; 300) qui est à même d'éliminer des matières particulaires (120) d'un gaz (40), le procédé comprenant l'étape suivante consistant à :
produire au moins une série d'impulsions de décharge d'arc électrique (130 ; 135 ; 140), la au moins une série d'impulsions de décharge d'arc électrique (130 ; 135 ; 140) étant à même de générer au moins une série de décharges d'arc électrique dans le filtre (30 ; 300) et, de la sorte, des ondes de pression qui délogent, mais ne brûlent pas la matière particulaire (120) prisonnière dans le filtre (30 ; 300), du filtre (30 ; 300).

2. Procédé selon la revendication 1, comprenant en outre l'utilisation d'un distributeur de distance de décharge commandé électriquement et qui est à même de commander la tension et l'énergie des impulsions appliquées à une électrode dans le filtre (30 ; 300) et qui est à même de permettre de commander de multiples sorties à partir d'une seule alimentation en tension élevée, de préférence obtenue par une polarisation positive ou négative d'une ou plusieurs électrodes ou d'un ou plusieurs noeuds intermédiaires de la distance de décharge pour générer des emplacements de décharge préférentiels.

3. Procédé selon la revendication 1 ou la revendication 2, comprenant en outre la création d'emplacements de décharge préférentiels en ionisant partiellement du gaz dans un emplacement préféré, de préférence en générant activement une décharge de luminescence se déplaçant autour, en utilisant par exemple l'écoulement de gaz ou en refoulant un écoulement de courant à travers la couche de matière particulaire immédiatement avant l'impulsion principale, en ionisant localement le gaz à l'intérieur de la matière particulaire poreuse et en entourant immédiatement celle-ci.

4. Procédé selon une ou plusieurs des revendications précédentes, dans lequel chaque impulsion de décharge d'arc électrique (130 ; 135 ; 140) a un courant d'impulsion de pic minimal d'environ 10A, de préférence d'environ 20 A à 50 A, et/ou un courant d'impulsion de pic maximal d'environ 1000A, de préférence d'environ 100A, les impulsions de décharge d'arc électrique comprennent des impulsions (130 ; 135 ; 140) ayant une libération d'énergie d'impulsion par longueur de décharge électrique d'environ 0,1 mJ/mm à environ 100 mJ/mm, de préférence entre 1 mJ/mm et 10 mJ/mm, le temps de croissance (rt) de chaque impulsion de décharge d'arc électrique (130 ; 135 ; 140) est d'environ 10⁻⁹ s à 10⁻⁷ s, de préférence 10⁻⁸ s,
de préférence le nombre d'impulsions va jusqu'à 10⁶ par litre de volume de filtre, mieux encore 10³ impulsions par litre à 10⁵ impulsions par litre, et/ou bien mieux encore le taux de répétition des impulsions se situe entre environ 5 Hz à 50 Hz, de préférence d'environ 10 Hz à 20 Hz,
la largeur d'impulsion est d'environ 1 à 1000 ns, de préférence de 10 à 500 ns, mieux encore d'environ 50 ns, et
une hauteur d'impulsion minimale est d'environ 10 A.

5. Aménagement de régénération de filtre (5), comprenant :
un dispositif de génération d'impulsions (70) qui est à même de générer au moins une série d'impulsions de décharge électriques (130 ; 135 ; 140), la au moins une série d'impulsions de décharge d'arc électrique (130 ; 135 ; 140) étant à même de générer au moins une série de décharges d'arc électrique et, par suite, au moins une série d'ondes de pression dans un filtre (30 ; 300) qui amène la matière particulaire (120) prisonnière dans le filtre (30 ; 300) à se déloger du filtre (30 ; 300), mais pas à brûler.

6. Aménagement de régénération de filtre selon la revendication 5, comprenant en outre :
un filtre (30 ; 300) ;
au moins une première électrode (100), en particulier une électrode de terre, la au moins une première électrode (100) étant aménagée dans le filtre (30 ; 300) ;
au moins une seconde électrode (110), la au moins une seconde électrode (110), de préférence une électrode active (110), étant à une certaine distance de la première électrode (100).

7. Aménagement de régénération de filtre selon la revendication 6, dans lequel :
une pluralité de première électrodes (100) sont connectées l'une à l'autre et/ou une pluralité de secondes électrodes (110) sont connectées l'une à l'autre, et la pluralité de secondes électrodes (110) sont distribuées uniformément à une distance de la au moins une première électrode (100).

8. Aménagement de régénération de filtre selon une ou plusieurs des revendications 5 à 7, dans lequel plusieurs premières électrodes (100) sont aménagées dans le filtre (30 ; 300) et chaque première électrode (100) est associée à deux secondes électrodes (110) ou plus qui se trouvent à une certaine distance de la première électrode respective (100) ;
le dispositif générateur d'impulsions (70) comprend une alimentation en tension (225), de préférence une alimentation en tension CC, et au moins un groupe d'électrodes comprenant au moins une première électrode (100) et au moins une seconde électrode (110), dans lequel la au moins une première électrode (100) est connectée à une borne de tension élevée et la au moins une seconde électrode (110) du même groupe d'électrodes est connectée à la terre ; et
l'aménagement de filtre comprend par ailleurs un inverseur (205) qui est à même de modifier la polarité des bornes.

9. Aménagement de régénération de filtre selon une ou plusieurs des revendications 5 à 8, dans lequel :
le dispositif générateur d'impulsions (70) est à même de générer des impulsions de décharge d'arc électrique, chacune ayant un courant de pic minimal d'environ 10 A et/ou un courant de pic maximal d'environ 1000 A, de préférence d'environ 100 A, le dispositif générateur d'impulsions (70) est à même de générer au moins une série d'impulsions de décharge d'arc électrique, notamment des impulsions (130 ; 135 ; 140) ayant une libération d'énergie d'impulsion par longueur de décharge de l'arc électrique d'environ 0,1 mJ/mm à 100 mJ/mm, de préférence entre 1 mJ/mm et 10 mJ/mm ;
le dispositif générateur d'impulsions (70) est à même de générer des impulsions de décharge d'arc électrique ayant un temps de croissance d'environ 10⁻⁹ s à 10⁻⁷ s, de préférence 10⁻⁸ s ; et
le dispositif générateur d'impulsions (70) est à même de générer au moins une série d'impulsions de décharge d'arc électrique (130 ; 135 ; 140), dans lequel le nombre d'impulsions va jusqu'à 10⁶ par litre de volume de filtre, de préférence de 10³ impulsions par litre à 10⁵ impulsions par litre, de préférence ayant un taux de répétition d'impulsions d'environ 5 Hz à 50 Hz, de préférence de 10 Hz à 20 Hz.

10. Aménagement de régénération de filtre selon une ou plusieurs des revendications 5 à 9, comprenant par ailleurs une distance d'électrode variable qui est à même de commander les paramètres électriques de la décharge et de la régénération, de préférence sous la forme d'une distance d'électrodes électriquement variable.

11. Aménagement de régénération de filtre selon la revendication 10, comprenant en outre un noeud intermédiaire dan la distance d'électrode qui est polarisée positivement ou négativement.

12. Aménagement de régénération de filtre selon l'une quelconque des revendications 5 à 11, comprenant en outre un distributeur de distance d'électrode commandé électriquement qui est à même de commander la tension et l'énergie des impulsions appliquées à une électrode dans le filtre (30 ; 300) et à même de permettre de commander des sorties multiples à partir d'une seule alimentation en tension élevée, de préférence obtenue par polarisation positive ou négative d'une ou plusieurs électrodes ou d'un ou plusieurs noeuds de la distance entre électrodes pour générer des emplacements de décharge préférentiels.

13. Filtre à particules diesel (30, 300), comprenant :
un matériau filtrant (55) qui est à même de piéger des matières particulaires dans lequel le matériau filtrant a une résistance à la température maximale d'environ 600 °C, de préférence d'environ 500 °C à 550 °C, mieux encore d'environ 400 °C à 450 °C,
au moins une paire d'électrodes (100, 110) qui est à même de générer des décharges d'arc électrique provoquées par au moins une série d'impulsions de décharge d'arc électrique (130 ; 135 ; 140) et, par suite, faisant en sorte qu'au moins une série d'ondes de pression soient générées dans un filtre (30 : 300), moyennant quoi la matière particulaire (120) prisonnière dans le filtre (30 ; 300) est délogée du filtre (30 ; 300), la au moins une série d'impulsions de décharge d'arc électrique étant configurée de sorte que les décharges d'arc électrique générées ne brûlent pas la matière particulaire enserrée dans le filtre (30 ; 300).
